# FASCICULE DE BREVET EUROPEEN

(11) **EP 4 298 050 B1**
(45) Date de publication et mention de la délivrance du brevet: **02.04.2025**
(21) Numéro de dépôt: 22708979.4
(22) Date de dépôt: 11.02.2022
(51) Int. Cl.: B66F 9/065, B66F 11/04, E02F 9/16, B66F 9/075, E02F 3/28

(54) **ENGIN DE MANUTENTION DE CHARGE**
LASTHANDHABUNGSFAHRZEUG
LOAD-HANDLING VEHICLE

(30) Priorité: 25.02.2021 FR 2101826
(43) Date de publication de la demande: 03.01.2024
(73) Titulaire: MANITOU BF, 44150 Ancenis (FR)
(72) Inventeur: LEON, David, 44150 ANCENIS (FR); LEHMANN, Thierry, 44150 ANCENIS (FR)
(74) Mandataire: Ipsilon
(86) Numéro de dépôt international: PCT/FR2022/050252
(87) Numéro de publication internationale: WO 2022/180317

(56) Documents cités:
- GB-A- 1 427 076
- US-A1- 2016 009 321
- US-A1- 2017 182 946

## Description

La présente invention concerne un engin de manutention de charge.

Elle concerne en particulier un engin de manutention de charge comprenant un châssis déplaçable sur le sol, une cabine de pilotage et un système de manutention de charge portés par ledit châssis, ledit système de manutention comprenant au moins un bras de levage monté mobile entre une position haute et une position basse et la cabine comprenant un plancher, un plafond, une face avant, une face arrière opposée et deux faces latérales avec l'une des faces latérales munie d'une ouverture d'accès à la cabine pouvant être fermée par une porte, et l'autre face latérale jouxtée par le bras de levage au moins en position basse dudit bras, ladite cabine étant équipée d'un siège et présentant au moins un point repère du siège appelé SIP établi et défini suivant la norme internationale ISO 5353 1995 et pouvant être considéré comme l'intersection entre le plan vertical passant par la ligne médiane du siège et l'axe d'articulation entre le tronc et les cuisses d'un conducteur.

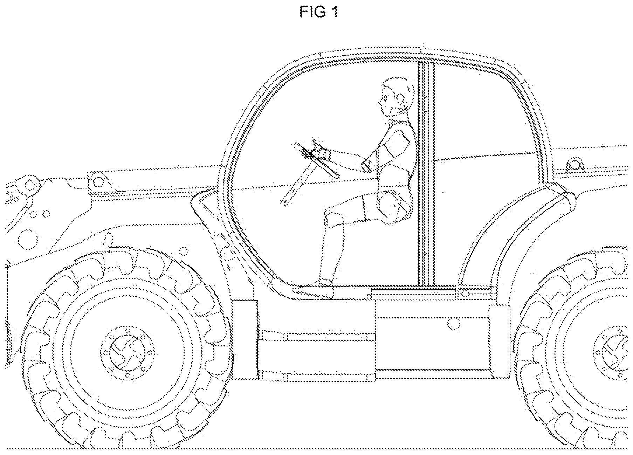

Un tel engin de manutention, tel que décrit dans le document US 2017/182946, est bien connu à ceux versés dans cet art et permet, en particulier lorsque le bras est un bras télescopique, une manutention de charge à une grande hauteur. Le positionnement latéral du bras de levage permet une bonne visibilité de l'avant de l'engin. Pour conserver également une bonne visibilité périphérique, il est nécessaire jusqu'à présent de disposer d'une cabine surélevée comme illustré à la figure 1 pour offrir au conducteur une vision haute. Une telle solution nécessite de disposer de plusieurs marches d'accès à la cabine. La présence de ces marches augmente le risque de chute ou de blessure du conducteur et accroît la fatigue musculaire de ce dernier dans la mesure où les montées et descentes de la cabine sont, pour le conducteur d'un tel engin, généralement très fréquentes dans une journée. D'autres engins, tels que ceux décrits dans les documents US 2016/009321 et GB 1427076, sont également connus.

Un but de l'invention est de proposer un engin dont la conception permet, tout en respectant le gabarit routier, de limiter les risques de chute et la fatigue musculaire du conducteur sans nuire à la vision périphérique du conducteur à l'intérieur de la cabine.

A cet effet, l'invention a pour objet un engin de manutention de charge comprenant un châssis déplaçable sur le sol, une cabine de pilotage et un système de manutention de charge portés par ledit châssis, ledit système de manutention comprenant au moins un bras de levage monté mobile entre une position haute et une position basse et la cabine comprenant un plancher, un plafond, une face avant, une face arrière opposée et deux faces latérales avec l'une des faces latérales munie d'une ouverture d'accès à la cabine pouvant être fermée par une porte, et l'autre face latérale jouxtée par le bras de levage au moins en position basse dudit bras, ladite cabine étant équipée d'un siège et présentant au moins un point repère du siège appelé SIP, établi et défini suivant la norme internationale ISO 5353:1995, caractérisé en ce que la cabine présente une hauteur intérieure minimale prise entre le plancher et le plafond, au niveau du point repère du siège SIP, supérieure à 1705 mm et une distance entre le plancher et le sol inférieure à 800 mm à l'état positionné de l'engin sur une surface de sol plane horizontale, et en ce que la distance entre le ou chaque point repère du siège SIP et le plancher de la cabine est au moins égale à 650 mm. Il doit être noté qu'on entend par plancher de la cabine, à l'état positionné de l'engin sur une surface plane horizontale, la surface horizontale de sol de la cabine située à l'aplomb du siège et sur laquelle les pieds du conducteur prennent appui pour se lever et ou s'asseoir sur le siège. Le point repère du siège SIP est spécifié par le fabricant de l'engin et/ou du siège. Les caractéristiques structurelles de la cabine, qui permettent un respect du gabarit routier, se traduisent par une position semi-debout du conducteur de l'engin. Cette position ne nuit pas au confort du conducteur. Cette position semi-debout permet de conserver la vision périphérique tout en limitant le nombre de marches d'accès au plancher de la cabine.

Selon un mode de réalisation de l'invention, la distance entre le ou chaque point repère du siège SIP et le plancher de la cabine est inférieure à 1045 mm. La plage ainsi proposée pour la distance entre le ou chaque point repère du siège SIP et le plancher de la cabine permet le maintien d'un confort de la position assise pour le conducteur de l'engin.

Selon un mode de réalisation de l'invention, l'engin présente au moins une marche d'accès au plancher de la cabine. En variante, l'engin peut ne présenter aucune marche d'accès au plancher.

Selon un mode de réalisation de l'invention, l'engin présente une seule marche d'accès au plancher de la cabine. Il en résulte une moindre fatigue musculaire et un risque de chute réduit

Selon un mode de réalisation de l'invention, la ou au moins l'une des marches d'accès au plancher de la cabine est disposée à l'intérieur de la cabine. Cette marche d'accès est ainsi intégrée à la cabine et située derrière l'ouverture d'accès. Cela permet de réduire les risques d'accident. En variante, la ou au moins l'une des marches d'accès au plancher de la cabine est disposée à l'extérieur de la cabine. Dans ce mode de réalisation, la ou au moins l'une des marches d'accès au plancher de la cabine est située sous la cabine, sous l'ouverture d'accès.

Selon un mode de réalisation de l'invention, l'ouverture d'accès à la cabine est délimitée par un bord supérieur, un bord inférieur et des bords latéraux et la ou au moins l'une des marches d'accès au plancher de la cabine présente une tablette correspondant à la surface plane horizontale de la marche sur laquelle on pose le pied, disposée au niveau du bord inférieur de l'ouverture d'accès à la cabine.

Selon un mode de réalisation de l'invention, à l'état positionné de l'engin sur une surface plane horizontale, le bord inférieur de l'ouverture d'accès est écarté du sol d'une distance au moins égale à 150 mm, et de préférence au plus égale à 800 mm.

Selon un mode de réalisation de l'invention, le plancher et la marche d'accès au plancher disposée immédiatement en avant du plancher pris par rapport au sens d'introduction dans la cabine à travers l'ouverture d'accès sont décalés l'un par rapport à l'autre pour former un escalier. Cette disposition, par opposition à des marches en échelle où les marches sont disposées l'une au-dessus de l'autre, offre une plus grande sécurité lors de la montée et de la descente de la cabine.

### Brève description des dessins

L'invention sera bien comprise à la lecture de la description suivante d'exemples de réalisation, en référence aux dessins annexés dans lesquels :
[Fig. 1] représente une vue schématique partielle de côté d'une cabine de pilotage d'un engin de l'état de la technique,
[Fig. 2] représente une vue schématique de côté d'un engin conforme à l'invention prise côté ouverture d'accès à la cabine,

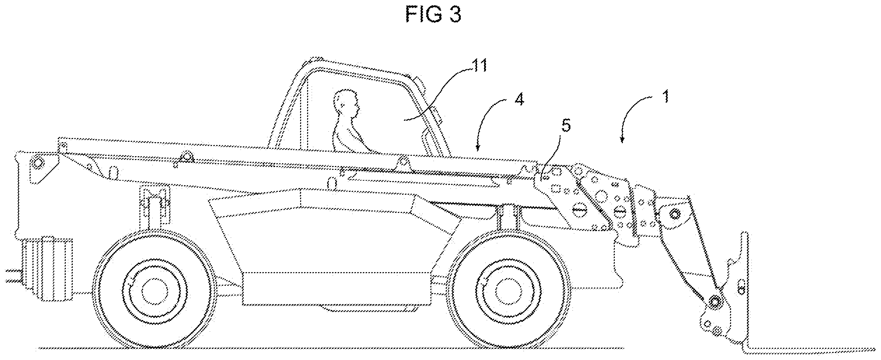

[Fig. 3] représente une vue schématique de côté d'un engin conforme à l'invention prise côté bras de levage,
[Fig. 4] représente une vue schématique de côté d'un engin conforme à l'invention prise côté ouverture d'accès à la cabine en l'absence de conducteur,

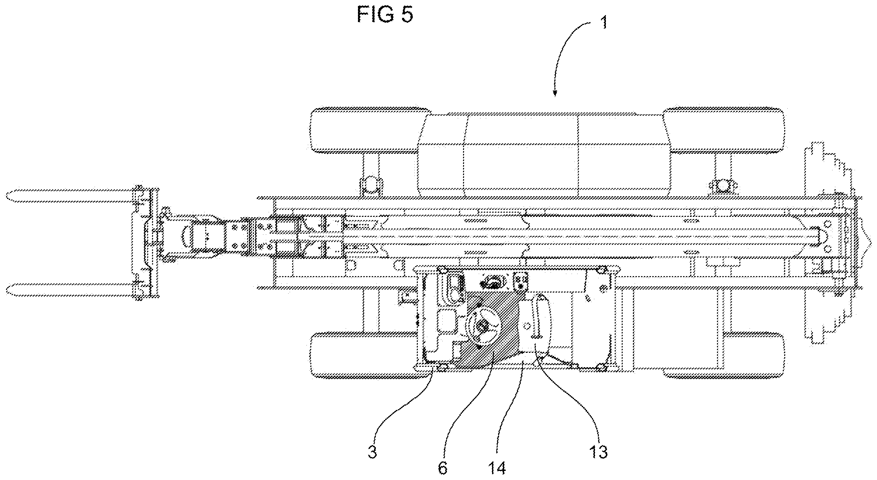

[Fig. 5] représente une vue schématique de dessus d'un engin conforme à l'invention,

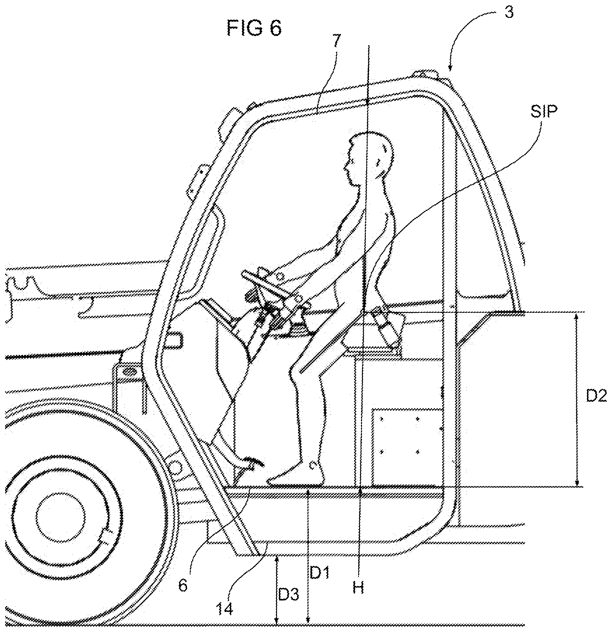

[Fig. 6] représente une vue schématique partielle de côté d'une cabine de pilotage d'un engin conforme à l'invention prise côté ouverture d'accès à la cabine,
[Fig. 7] représente sous forme de deux vues des cabines de pilotage correspondant l'une à gauche, à l'état de la technique, l'autre, à l'invention,
[Fig. 8] représente sous forme de deux vues des cabines de pilotage correspondant l'une à gauche, avec la marche d'accès disposée à l'intérieur de la cabine, l'autre, avec la marche d'accès disposée à l'extérieur de la cabine.

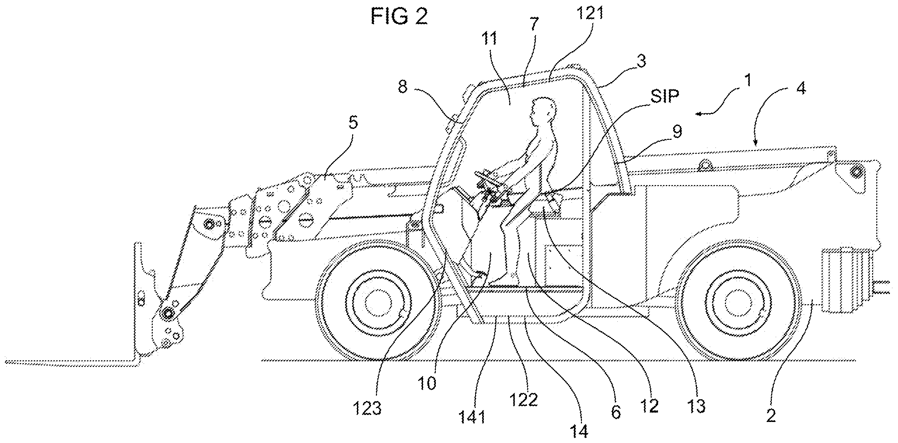

Comme mentionné ci-dessus, l'invention a pour objet un engin 1 de manutention de charge du type de celui représenté à la figure 2. Cet engin 1 comprend un châssis 2 déplaçable au sol réalisé ici sous forme d'un châssis 2 roulant équipé de quatre roues et d'un groupe motopropulseur.

Cet engin 1 comprend une cabine 3 de pilotage portée par le châssis 2 à l'intérieur de laquelle un conducteur peut prendre place en position assise. Cet engin 1 comprend encore un système 4 de manutention de charge comprenant au moins un bras 5 de levage.

Ce bras 5 de levage, qui s'étend suivant la direction avant/arrière de l'engin, est un bras pivotant, monté mobile à pivotement autour d'un axe dit horizontal parallèle au plan d'appui au sol de l'engin à l'état positionné de l'engin sur une surface plane horizontale, pour le passage du bras de levage d'une position basse à une position haute et inversement. L'axe pivot du bras s'étend transversalement à la direction avant/arrière de l'engin.

Ce bras 5 de levage peut être un bras télescopique comme dans l'exemple représenté. Ce bras 5 de levage peut être équipé, à son extrémité, d'un accessoire de manutention de charge, tel qu'une fourche, une nacelle ou autre.

Le terme "charge" doit être compris dans son acceptation la plus large et inclut donc les personnes.

Dans un tel engin, la cabine 3 de pilotage et le bras 5 de levage sont disposés côte-à-côte le long d'une ligne transversale à la direction avant/arrière de l'engin, ce qui permet d'avoir un bras 5 de levage de grande longueur.

La cabine 3 comprend un plancher 6, un plafond 7, une face avant 8, une face arrière 9 opposée et deux faces latérales opposées représentées en 10 et 11 aux figures avec la face latérale 10 munie d'une ouverture 12 d'accès à la cabine 3 et la face latérale 11 jouxtée par le bras 5 de levage au moins en position basse dudit bras 5. L'ouverture 12 d'accès à la cabine peut être fermée par une porte.

Comme l'illustrent les figures, l'axe pivot de liaison du bras 5 de levage au châssis 2 est disposé à l'arrière de l'engin 1 de sorte qu'en position haute du bras 5 de levage, ce dernier s'étend partiellement à un niveau supérieur à celui du plafond de la cabine 3. En position basse, ce bras 5 de levage s'étend au moins partiellement le long de la face latérale 11 de la cabine 3.

Cette disposition latérale du bras 5 de levage par rapport à la cabine 3 oblige à un positionnement du conducteur dans la cabine 3 tel que les yeux du conducteur sont disposés à un niveau supérieur à celui du bras 5 de levage en position basse du bras 5 de levage, comme illustré à la figure 2, pour permettre au conducteur de l'engin de disposer d'une vision périphérique dite haute.

C'est pour cette raison que dans l'état de la technique comme illustré à la figure 1, le plancher de la cabine est très haut par rapport au sol et de nombreuses marches sont nécessaires pour accéder à la cabine.

Cette cabine 3 est équipée d'un siège 13 et présente au moins un point en repère de siège appelé SIP établi et défini suivant la norme internationale ISO 5353:1995. Cette norme internationale correspond à la norme européenne EN ISO 5353:1998 qui a également le statut d'une norme française NF EN ISO 5353 de novembre 1998. Cette norme internationale prescrit une méthode et le dispositif à utiliser pour la détermination du point repère du siège SIP pour tout type de siège.

Le point repère de siège SIP, tel qu'il est établi et défini dans la norme internationale, peut être considéré, pour la conception de la cabine, comme l'intersection entre le plan vertical passant par la ligne médiane du siège et l'axe d'articulation théorique entre le tronc et les cuisses du conducteur. Le point repère de siège SIP est fixe par rapport à l'engin et ne se déplace pas avec le siège en fonction des réglages et/ou de la plage d'oscillation du siège. Ce point repère du siège SIP est spécifié par le fabricant de l'engin.

Pour faciliter l'accès à la cabine 3 tout en conservant la visibilité périphérique haute du conducteur de l'engin 1, la cabine 3 présente une hauteur H intérieure minimale prise entre le plancher 6 et le plafond 7 au niveau du point repère du siège SIP, c'est-à-dire à la verticale ou au droit dudit point repère du siège SIP, supérieure à 1705 mm. Cette hauteur est bien supérieure à celle des cabines de l'état de la technique qui ne dépasse généralement pas 1550 mm.

Il est rappelé que dans la présente description, on entend par "plancher de la cabine", à l'état positionné de l'engin sur une surface plane horizontale, la surface horizontale du sol de la cabine située à l'aplomb, c'est-à-dire à la verticale du siège, et sur laquelle les pieds du conducteur prennent appui pour se lever et ou s'asseoir sur le siège.

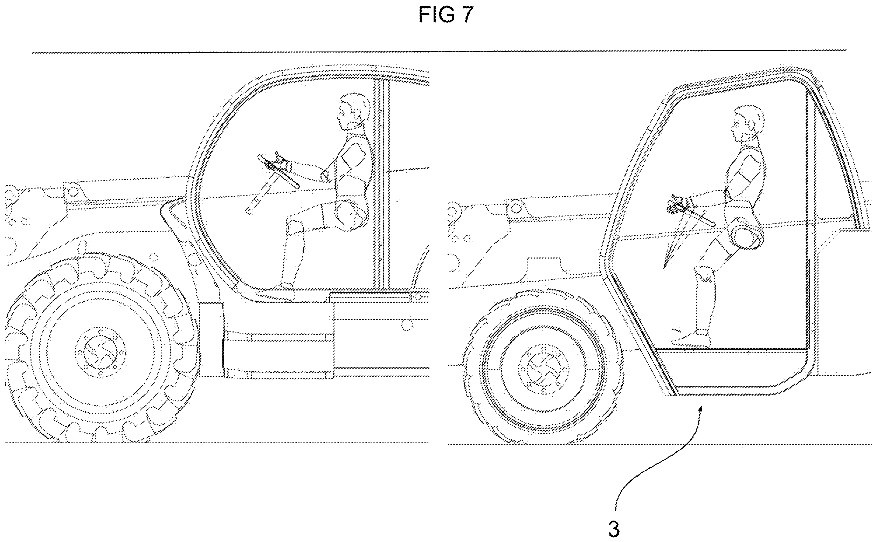

Cette hauteur H permet au conducteur de l'engin d'occuper, à l'état positionné sur son siège, une position semi-debout comme illustré à la figure 7.

Par ailleurs, la distance D1 entre le plancher 6 et le sol est inférieure à 800 mm à l'état positionné de l'engin 1 sur une surface de sol plane horizontale et la distance D2 entre le ou chaque point repère du siège SIP et le plancher 6 de la cabine 3 est au moins égale à 650 mm et, de préférence, inférieure à 1045 mm.

Toutes ces caractéristiques dimensionnelles permettent au conducteur de l'engin d'occuper, à l'état assis sur son siège, une position semi-debout qui reste confortable tout en permettant au conducteur de l'engin de monter et de descendre aisément de la cabine.

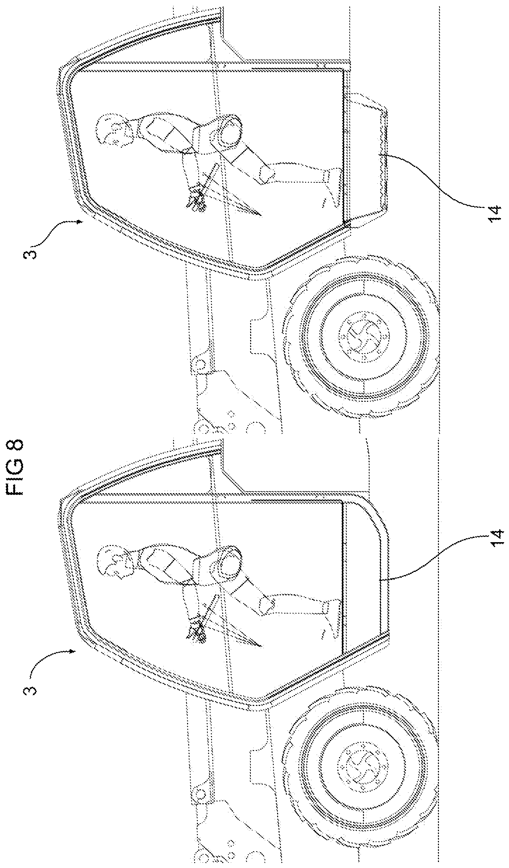

Pour faciliter cette montée et cette descente de la cabine, l'engin 1 présente au moins une marche 14 d'accès au plancher 6 de la cabine 3. Dans les exemples représentés, l'engin 1 présente une seule marche 14 d'accès au plancher 4 de la cabine 3. Cette marche 14 d'accès est disposée ici à l'intérieur de la cabine 3. En variante, cette marche 14 d'accès peut être disposée à l'extérieur de la cabine 3 de la cabine comme représenté à la figure 8. En variante encore, l'engin 1 peut être dépourvu de marche d'accès au plancher de la cabine.

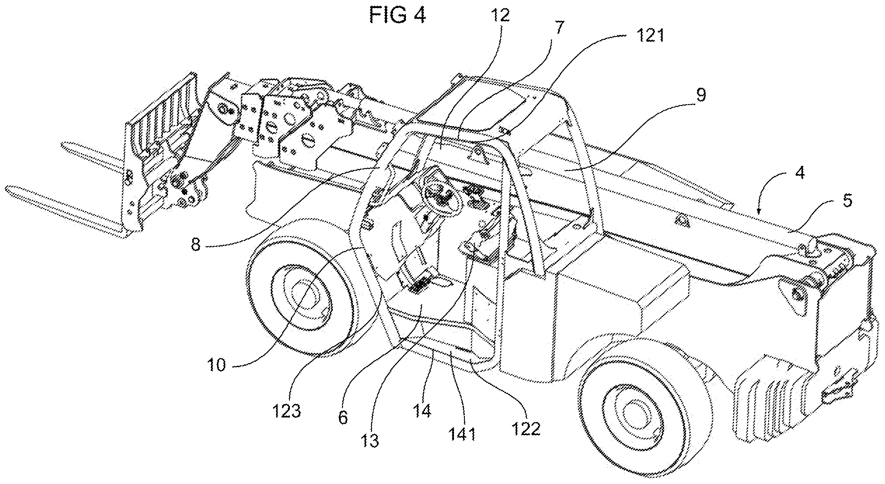

Ainsi, dans l'exemple représenté à la figure 4, l'ouverture 12 d'accès à la cabine 3 est délimitée par un bord supérieur 121, un bord inférieur 122 et des bords latéraux 123 et la marche 14 d'accès au plancher 6 de la cabine présente une tablette 141, formée par la surface plane horizontale de la marche sur laquelle on pose le pied, disposée au niveau du bord inférieur 122 de l'ouverture 12 d'accès à la cabine 3. La tablette 141 forme ainsi une partie de la base de la cabine 3 de pilotage dans ce mode de réalisation particulier où la marche d'accès est disposée à l'intérieur de la cabine, c'est-à-dire à l'intérieur du volume délimité par la cabine et accessible par l'ouverture d'accès de ladite cabine.

Indépendamment de la conception de la cabine 3, c'est-à-dire que la ou les marches 14 d'accès à la cabine 3 soient à l'intérieur ou à l'extérieur de la cabine 3, il est préférable que le plancher 6 et la marche 14 d'accès au plancher disposée immédiatement à l'avant du plancher 6, pris par rapport au sens d'introduction dans la cabine 3 à travers l'ouverture 12 d'accès, soient décalés l'un par rapport à l'autre pour former un escalier. Cette disposition offre plus de sûreté que des marches d'accès et un plancher disposés à la manière d'une échelle l'un au-dessus de l'autre comme cela est le cas dans l'état de la technique.

Idéalement, à l'état positionné de l'engin 1 sur une surface plane horizontale, le bord inférieur 122 de l'ouverture 12 d'accès est écarté du sol d'une distance D3 au moins égale à 150 mm et de préférence au plus égale à 800 mm.

Pour parfaire cet abaissement du niveau du plancher 6 de la cabine 3 par rapport au sol, la cabine 3 est positionnée sur le châssis 2 entre la roue gauche avant et la roue arrière gauche de l'engin 1, l'empattement de l'engin 1 pouvant être au besoin adapté ainsi que la dimension des roues.

L'architecture nouvelle de la cabine 3 de pilotage, telle que décrite ci-dessus, permet une montée et une descente aisées de la cabine de pilotage sans nuire au confort du conducteur à l'état assis sur son siège ni à sa vision périphérique.

## Revendications

1. Engin (1) de manutention de charge comprenant un châssis (2) déplaçable sur le sol, une cabine (3) de pilotage et un système (4) de manutention de charge portés par ledit châssis (2), ledit système (4) de manutention comprenant au moins un bras (5) de levage monté mobile entre une position haute et une position basse et la cabine (3) comprenant un plancher (6), un plafond (7), une face avant (8), une face arrière (9) opposée et deux faces latérales (10, 11) avec l'une (10) des faces latérales (10, 11) munie d'une ouverture (12) d'accès à la cabine (3) pouvant être fermée par une porte, et l'autre face latérale (11) jouxtée par le bras (5) de levage au moins en position basse dudit bras (5), ladite cabine (3) étant équipée d'un siège (13) et présentant au moins un point repère du siège appelé SIP, établi et défini suivant la norme internationale ISO 5353:1995, **caractérisé en ce que** la cabine (3) présente une hauteur (H) intérieure minimale prise entre le plancher (6) et le plafond (7), au niveau du point repère du siège SIP, supérieure à 1705 mm et une distance (D1) entre le plancher (6) et le sol inférieure à 800 mm à l'état positionné de l'engin (1) sur une surface de sol plane horizontale, et **en ce que** la distance (D2) entre le ou chaque point repère du siège SIP et le plancher (6) de la cabine (3) est au moins égale à 650 mm.

2. Engin (1) de manutention de charge selon la revendication 1, **caractérisé en ce que** la distance (D2) entre le ou chaque point repère du siège SIP et le plancher (6) de la cabine (3) est inférieure à 1045 mm.

3. Engin (1) de manutention de charge selon l'une des revendications 1 ou 2, **caractérisé en ce que** l'engin (1) présente au moins une marche (14) d'accès au plancher (6) de la cabine (3).

4. Engin (1) de manutention de charge selon la revendication 3, **caractérisé en ce que** l'engin (1) présente une seule marche (14) d'accès au plancher (6) de la cabine (3).

5. Engin (1) de manutention de charge selon l'une des revendications 3 ou 4, **caractérisé en ce que** la ou au moins l'une des marches (14) d'accès au plancher (6) de la cabine (3) est disposée à l'intérieur de la cabine (3).

6. Engin (1) de manutention de charge selon l'une des revendications 3 à 5, **caractérisé en ce que** l'ouverture (12) d'accès à la cabine (3) est délimitée par un bord supérieur (121), un bord inférieur (122) et des bords latéraux (123) et **en ce que** la ou au moins l'une des marches (14) d'accès au plancher (6) de la cabine (3) présente une tablette (141) correspondant à la surface plane horizontale de la marche sur laquelle on pose le pied, disposée au niveau du bord inférieur (122) de l'ouverture (12) d'accès à la cabine (3).

7. Engin (1) de manutention de charge selon la revendication 6, **caractérisé en ce que**, à l'état positionné de l'engin (1) sur une surface plane horizontale, le bord inférieur (122) de l'ouverture (12) d'accès est écarté du sol d'une distance (D3) au moins égale à 150 mm et de préférence au plus égale à 800 mm.

8. Engin (1) de manutention de charge selon l'une des revendications 3 à 7, **caractérisé en ce que** le plancher (6) et la marche (14) d'accès au plancher (6) disposée immédiatement en avant du plancher (6) pris par rapport au sens d'introduction dans la cabine (3) à travers l'ouverture (12) d'accès sont décalés l'un par rapport à l'autre pour former un escalier.

## Patentansprüche

1. Lastbewegungsmaschine (1), umfassend ein Fahrgestell (2), das auf dem Boden bewegbar ist, eine Steuerkabine (3) und ein System (4) zum Bewegen von Lasten, die von dem Fahrgestell (2) getragen werden, das System (4) zum Bewegen umfassend mindestens einen Hebearm (5), der bewegbar zwischen einer oberen und einer unteren Position montiert ist, und die Kabine (3) umfassend einen Boden (6), eine Decke (7), eine Vorderseite (8), eine gegenüberliegende Rückseite (9) und zwei seitliche Seiten (10, 11) wobei eine (10) der seitlichen Seiten (10, 11) mit einer Öffnung (12) für den Zugang zu der Kabine (3), die durch eine Tür geschlossen werden kann, versehen ist, und die andere seitliche Seite (11) zumindest in der unteren Position des Arms (5) an den Hebearm (5) angrenzt, wobei die Kabine (3) mit einem Sitz (13) ausgestattet ist und mindestens einen Sitzreferenzpunkt, genannt SIP, aufweist, der gemäß der internationalen Norm ISO 5353:1995 festgelegt und definiert ist, **dadurch gekennzeichnet, dass** die Kabine (3) eine minimale innere Höhe (H), genommen zwischen dem Boden (6) und der Decke (7), an dem Sitzreferenzpunkt SIP, von mehr als 1705 mm und in dem positionierten Zustand des Fahrzeugs (1) auf einer horizontalen ebenen Bodenfläche einen Abstand (D1) zwischen dem Boden (6) und dem Boden von weniger als 800 mm aufweist, und dass der Abstand (D2) zwischen dem oder jedem Sitzreferenzpunkt SIP und dem Boden (6) der Kabine (3) mindestens 650 mm ist.

2. Lastbewegungsmaschine (1) nach Anspruch 1, **dadurch gekennzeichnet, dass** der Abstand (D2) zwischen dem oder jedem Sitzreferenzpunkt SIP und dem Boden (6) der Kabine (3) weniger als 1045 mm ist.

3. Lastbewegungsmaschine (1) nach einem der Ansprüche 1 oder 2, **dadurch gekennzeichnet, dass** die Maschine (1) mindestens eine Stufe (14) für den Zugang zum Boden (6) der Kabine (3) aufweist.

4. Lastbewegungsmaschine (1) nach Anspruch 3, **dadurch gekennzeichnet, dass** die Lastbewegungsmaschine (1) eine einzige Stufe (14) für den Zugang zum Boden (6) der Kabine (3) aufweist.

5. Lastbewegungsmaschine (1) nach einem der Ansprüche 3 oder 4, **dadurch gekennzeichnet, dass** die oder mindestens eine der Stufen (14) für den Zugang zum Boden (6) der Kabine (3) innerhalb der Kabine (3) angeordnet ist.

6. Lastbewegungsmaschine (1) nach einem der Ansprüche 3 bis 5, **dadurch gekennzeichnet, dass** die Öffnung (12) für den Zugang zu der Kabine (3) durch einen oberen Rand (121), einen unteren Rand (122) und seitliche Ränder (123) begrenzt ist, und dass die oder mindestens eine der Stufen (14) für den Zugang zum Boden (6) der Kabine (3) einen Absatz (141) aufweist, der der horizontalen ebenen Fläche der Stufe entspricht, auf die der Fuß aufgesetzt wird, und der auf Höhe des unteren Rands (122) der Öffnung (12) für den Zugang zu der Kabine (3) angeordnet ist.

7. Lastbewegungsmaschine (1) nach Anspruch 6, **dadurch gekennzeichnet, dass** in dem positionierten Zustand der Maschine (1) auf einer horizontalen ebenen Fläche der untere Rand (122) der Öffnung (12) für den Zugang um einen Abstand (D3) von mindestens 150 mm und vorzugsweise höchstens 800 mm von dem Boden beabstandet ist.

8. Lastbewegungsmaschine (1) nach einem der Ansprüche 3 bis 7, **dadurch gekennzeichnet, dass** der Boden (6) und die Stufe (14) für den Zugang zum Boden (6), die unmittelbar vor dem Boden (6) angeordnet ist, bezogen auf die Richtung der Einführung in die Kabine (3) durch die Öffnung (12) für den Zugang, zueinander versetzt sind, um eine Treppe zu bilden.

## Claims

1. A load-handling vehicle (1) comprising a chassis (2) able to move along the ground, a driver's cab (3) and a load-handling system (4), these two being supported by said chassis (2), said handling system (4) comprising at least one lifting arm (5) mounted with the ability to move between a raised position and a lowered position and the cab (3) comprising a floor (6), a roof (7), a front face (8), an opposite rear face (9) and two lateral faces (10, 11) with one (10) of the lateral faces (10, 11) being equipped with an opening (12) for accessing the cab (3) which can be closed by a door, and the other lateral face (11) being adjacent to the lifting arm (5) at least when said arm (5) is in the lowered position, said cab (3) being equipped with a seat (13) and having at least one seat index point referred to as SIP, established and defined in accordance with International standard ISO 5353:1995, **characterized in that** the cab (3) has a minimal interior height (H), measured between the floor (6) and the roof (7), at the seat index point SIP, greater than 1705 mm and a distance (D1) between the floor (6) and the ground less than 800 mm when the vehicle (1) is positioned on flat horizontal ground, and **in that** the distance (D2) between the or each seat index point SIP and the floor (6) of the cab (3) is at least equal to 650 mm.

2. The load-handling vehicle (1) as claimed in claim 1, **characterized in that** the distance (D2) between the or each seat index point SIP and the floor (6) of the cab (3) is less than 1045 mm.

3. The load-handling vehicle (1) as claimed in one of claims 1 or 2,
**characterized in that** the vehicle (1) has at least one step (14) for accessing the floor (6) of the cab (3).

4. The load-handling vehicle (1) as claimed in claim 3, **characterized in that** the vehicle (1) has just one step (14) for accessing the floor (6) of the cab (3).

5. The load-handling vehicle (1) as claimed in one of claims 3 or 4, **characterized in that** the or at least one of the steps (14) for accessing the floor (6) of the cab (3) is located inside the cab (3).

6. The load-handling vehicle (1) as claimed in one of claims 3 to 5, **characterized in that** the opening (12) for accessing the cab (3) is delimited by an upper edge (121), a lower edge (122) and lateral edges (123) and **in that** the or at least one of the steps (14) for accessing the floor (6) of the cab (3) has a tread (141) corresponding to the flat horizontal surface of the step on which the foot is placed, located at the level of the lower edge (122) of the opening (12) for accessing the cab (3).

7. The load-handling vehicle (1) as claimed in claim 6, **characterized in that**, when the vehicle (1) is positioned on a flat horizontal surface, the lower edge (122) of the access opening (12) is separated from the ground by a distance (D3) at least equal to 150 mm and preferably at most equal to 800 mm.

8. The load-handling vehicle (1) as claimed in one of claims 3 to 7, **characterized in that** the floor (6) and the step (14) for accessing the floor (6) and which is located immediately in front of the floor (6) considered in relation to the direction of entry into the cab (3) through the access opening (12) are offset relative to one another to form stairs.
